# EUROPEAN PATENT APPLICATION

(11) **EP 4 573 894 A1**
(43) Date of publication of application: **25.06.2025**
(21) Application number: 24219376.1
(22) Date of filing: 12.12.2024
(51) Int. Cl.: A01K 11/00, A01K 29/00

(54) **ANIMAL HUSBANDRY SYSTEM**

(30) Priority: 19.12.2023 NL 2036576
(71) Applicant: Lely Patent N.V., 3147 PB Maassluis (NL)
(72) Inventor: VAN ADRICHEM, Paulus Jacobus Maria, 3147 PB Maassluis (NL); GANEFF, Martin Ivan, 3147 PB Maassluis (NL); VAN DER SLUIS, Joram Robin, 3147 PB Maassluis (NL)
(74) Representative: Octrooibureau Van der Lely N.V.

(57) **Abstract**

Animal husbandry system configured for tracking objects comprising animals (2) which can move about in an area (1), the system comprising a number of units (11) configured for locally detecting and tracking the position of the objects, each unit comprising sensor means configured for generating images and unit processing means configured for processing data, the system further comprising a hub comprising hub processing means connectable for data communication to all the unit processing means, the units (11) and the hub together being configured for an area-wide tracking of the objects, wherein the system is a modular system, the units (11) are substantially identical and the unit processing means are configured for processing at least data locally obtained from the sensor means in the unit (11). Local data processing in units (11) that are substantially identical allows for a conveniently modular and flexible, yet cheap system.

## Description

The present invention relates to an animal husbandry system configured for tracking objects comprising animals which can move about in an area, the system comprising a number of units configured for locally detecting and tracking the position of the objects, each unit comprising sensor means configured for generating images and unit processing means configured for processing data, the system further comprising a hub comprising hub processing means connectable for data communication to all the unit processing means, the units and the hub together being configured for an area-wide tracking of the objects.

Such systems are known in the art. Tracking animals, such as cows in a stable, plays an important role in modern animal husbandry systems. Being able to correctly locate and track animals within a group or herd is of paramount importance, for example for gathering reliable animal data.

WO2018/174812 describes a video monitoring system with a number of video cameras for identifying an individual animal in a group of animals each carrying an identification tag. An event of interest related to the individual animal is detected, after which the animal in question is tracked and its identity is determined by means of the identification tag as soon as it visits an identification station. Multiple animals may be tracked at the same time, when multiple events of interest have been detected. Not all individual animals are constantly tracked.

EP3335551 deals with a method of monitoring livestock inside of a building using a number of cameras arranged above the livestock for gathering tracking data relating to a motion of a tracked individual animal. The motion data thus obtained can be compared to stored motion data or motion patterns related to or associated with a special state or condition of an animal.

WO2022/260576 discloses a positioning system in which entities carrying mobile units transmit radio messages containing identity information via ultra-wideband (UWB) to a number of fixed base stations which determine the position of each mobile unit. Traces of the mobile units are registered. If a sufficiently large number of traces is being interrupted in a certain area in a certain time interval, the base station configuration is adapted.

WO2023/031759 shows an animal husbandry system in which the identity and the position of a group of animals is determined and tracked with the aid of monitoring and analyzing means, which are also able to detect lameness.

There is a need for an improved, economical and flexible system for tracking animals.

It is an object of the present invention to provide such an improved system.

The invention achieves the object at least in part by means of a system according to claim 1, in particular an animal husbandry system configured for tracking objects comprising animals which can move about in an area, the system comprising a number of units configured for locally detecting and tracking the position of the objects, each unit comprising sensor means configured for generating images and unit processing means configured for processing data, the system further comprising a hub comprising hub processing means connectable for data communication to all the unit processing means, the units and the hub together being configured for an area-wide tracking of the objects, wherein the system is a modular system, the units are substantially identical and the unit processing means are configured for processing at least data locally obtained from the sensor means in the unit.

In this way, the system can be expanded and is thus flexible. The substantially identical units are economically advantageous. A user-friendly and cheap system is thus realized.

The invention is based on the insight that local data processing in units that are substantially identical allows for a conveniently modular, adaptable system. This results in lower costs and higher flexibility.

Suitable and advantageous embodiments are described in the dependent claims, as well as in the description below.

According to a first embodiment of the invention, the units comprise a camera and a computer module comprising the unit processing means configured for processing and analyzing local sensor image data. This constitutes an efficient implementation, although other sensor means, of course, are also possible. Image analysis software is readily available.

According to a further embodiment, the processing of the local sensor image data comprises: detection of the objects in the sensor field of view; local tracking of the objects in the sensor field of view; sending of images and/or processed images to the hub; sending of position data of the objects in the sensor field of view to the hub. In this way, an important part of the data processing related to data locally obtained is performed in the unit processing means, which enhances the computational efficiency of the system.

In a further embodiment, the processing of the local sensor image data further comprises image undistortion and/or image compression. This further optimizes the system.

In accordance with yet another embodiment, the processing of the hub processing means comprises: receiving and storing images and/or processed images from the units; receiving position data of the objects from the units. Thus, the hub processing means are enabled to combine and further process the data locally obtained.

Advantageously, the processing of the hub processing means further comprises: image stitching for generating and storing a global image of the area; global tracking of the objects in the area. In this way, accurate tracking of the objects throughout the entire area is realized in an efficient way.

In a further embodiment, the processing of the hub processing means further comprises matching identities of animals detected and tracked by the units with identities of animals determined at an identification location. This further improves the reliability of the tracking process.

According to yet another embodiment, the processing of the hub processing means further comprises the analysis of animal movements. Such an analysis is highly useful for further analysis of the animals concerned.

Advantageously, the processing of the hub processing means further comprises the analysis of animal behaviours and/or conditions. In this way, a versatile system is achieved in an efficient way. For example, heat or lameness can be established advantageously with the aid of the hub processing means.

In accordance with a further embodiment, the unit processing means are configured for performing at least a part of the hub processing. By allotting a part of the hub data processing load to the unit processing means, the hub processing means have more processing capacity free for other applications, so that the system is enhanced.

In an alternative embodiment, the hub processing means are configured for performing at least a part of the unit processing. In this way, it suffices to equip the modular system with units having a low processing capacity, so that the system is cheap.

According to yet another embodiment, wherein the units further comprise illumination means, the unit processing means are configured for controlling the illumination means in response to data locally obtained. This an efficient implementation. For example, an object detected locally can be illuminated.

In a further embodiment, wherein the units further comprise illumination means, the hub processing means are configured for controlling the illumination means in response to data related to global tracking of the objects in the area. Thus, objects within the whole area can be searched, selected and illuminated. For example, a specific animal or a farmer can be located by the hub processing means and then illuminated.

In yet a further embodiment, wherein the system further comprises at least one vehicle, the unit processing means are configured for contacting the at least one vehicle for data communication. This constitutes a simple, yet efficient implementation. For example, wifi or bluetooth can be used.

According to yet another embodiment, wherein the system further comprises at least one vehicle, the hub processing means are configured for controlling the trajectory of the at least one vehicle. The global tracking data in the hub allow for an efficient vehicle control. A further optimization of the system is thus achieved.

In yet another embodiment, the hub processing means are configured for receiving means for enhancing its processing capacity. In this way, the system can be upgraded and/or expanded, which makes it highly flexible.

The invention will now be further explained with reference to the following Figure, which schematically illustrates the system according to the invention.

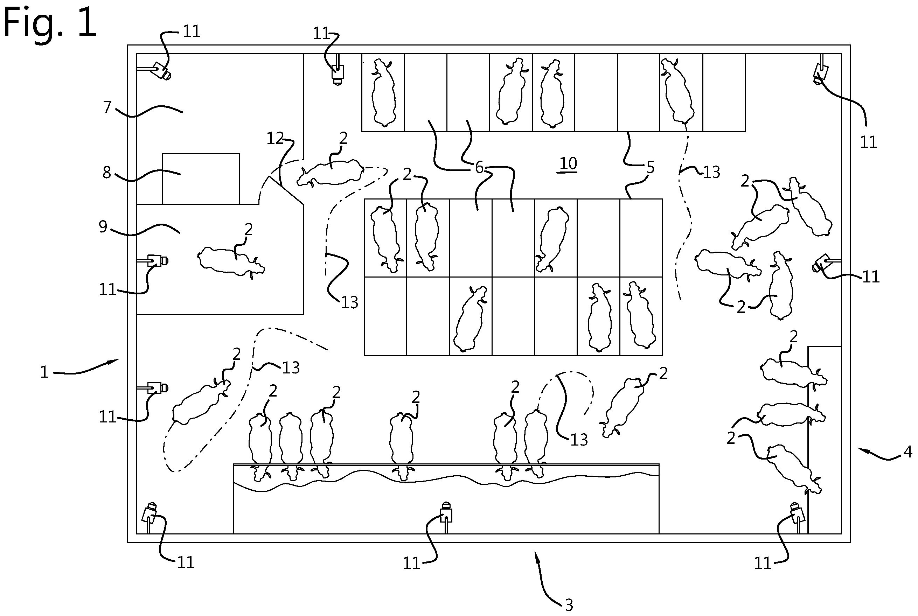

Figure 1 shows an area with an animal husbandry system according to the invention.

In Figure 1 an animal husbandry system with an area here in the form of a stable or shed or barn 1 wherein a group of animals 2 can move about freely is shown. In the example shown the animals are cows. Of course, the invention can also be applied to an animal husbandry system involving other animals, such as goats, pigs, horses, or even chickens, turkeys, etcetera. The stable 1 can also be a structure with, for example, a partly open roof. The system according to the invention can be applied in a free stall barn or in an open area like a meadow or pasture with cattle fences. It can also be applied in a combination of a stall and a pasture.

In the example shown, the stable 1 has a number of activity areas for the animals 2: a feeding area 3, a drinking area 4, at least one resting area 5 with cubicles 6, a milking area 7 with a milking robot 8, and a treatment area 9. All these areas are interconnected by one or more alleys 10.

Monitoring and analyzing means configured for determining and tracking the identity and the position of each individual animal 2 are provided, in the embodiment shown in the form of a number of units 11 with cameras and a processor with appropriate software, as will be elucidated below.

The units 11 are arranged for monitoring a region or a subarea or a number of subareas of the stable 1. Of course, other (optical) sensors can in principle be used instead of the cameras 11, or additionally. The units 11 are provided in such a way that, collectively, they are configured for monitoring substantially the complete shed 1, particularly all the animals 2. The units 11 can be provided in the shed 1 above the animals 2 (e.g. centrally, theoretically only one unit can be used), or as shown in Figure 1, on the walls of the shed 1.

The units 11 can be fixedly positioned and oriented in such a way that all relevant subareas of the area 1 can be monitored. Alternatively, they may be mounted in a pivotable way. The subareas may overlap. In case the invention is used in a pasture, the units 11 may be provided on fences, at a sufficient height above the ground. The chosen configuration obviously depends on the shape of the area or shed 1.

Suitable illumination means (not shown) for the area 1 are also provided. Preferably, they are integrated in the units 11. The units 11 are substantially identically constructed.

Separate identification means can be provided configured for establishing the identity of each individual animal 2. These separate identification means can be in the form of a tag in which animal identity data are stored, wearable by each animal 2, which tag can be read by at least one tag reader, provided for example in the milking robot 8, at the feeding area 3, at the drinking area 4, or on a vehicle which is moveable in the area 1, e.g. a cleaning vehicle (not shown). For example, Radio Frequency Identification, known as such, with tags/transponders and an antenna with a reader can be used. The tags may also be read by means of the cameras or with an extra camera.

The cameras are connected to a processor or a computer processing unit, and image analysis means (known as such, not shown). With the aid of the cameras, the processor and the image analysis means the animals 2 can be tracked in the shed 1. In an alternative embodiment, the identification means are also formed by the cameras, the processor and the image analysis means, so that it is not necessary for the animals 2 to wear tags. In that case, the cameras, the processor and the image analysis means form identification means configured for determining the identity of each individual animal 2 and detection and tracking means configured for detecting and tracking the position of each individual animal 2. An extra identification camera may be used in this case at an identification location, for example in the milking robot 8.

The cameras and the computer with image analysis means are configured to repeatedly detect and then temporarily track the position of individual animals 2 until a tracking error occurs. The animals 2 are moving about freely, so that after a certain time the tracking may be interrupted, for example if a cow 2 hides behind another cow 2, or if a cow 2 is only partly visible for the cameras, or if two cows 2 remain in close contact with each other for a while. The detection and tracking means assign to the individual animals 2 a track, schematically illustrated in the Figure with reference numeral 13. Here, the term "track" is understood to designate a movement pattern represented by consecutively updates of the animal's position. Of course, in practice the tracks can be much longer than shown in the Figure. A track 13 comprises tracking identity data and tracking position data from a moment of first detection of an animal 2 until a tracking error occurs and the detection and tracking means lose track of the animal 2 in question. At a later moment, a new track 13 will be assigned to the animal 2, as soon as it is detected again.

As explained earlier, in order to make sure that all animals 2 can be correctly identified, the system further comprises animal identification means (not shown) with individual animal identity data. Linking means are provided configured for repeatedly linking the tracking identity data of individual animals 2 to the individual animal identity data at a linking moment at a linking location by means of the identification means. The linking means provide a periodical ascertainment of the correct animal identity for the animal tracking means by comparing and matching the stored individual animal identity data with the tracking identity data assigned by the tracking means. In this way, a periodical matching with the correct animal identity as stored in the identification means is achieved.

As already mentioned above, the identification means (not shown) can comprise a tag wearable by each animal and at least one tag reader. This is a very simple and relatively cheap implementation. Additionally or alternatively, the identification means can comprise a (further) camera with image analysis means. The animals 2 can then be recognized at a suitable location from their size, body shape, skin pattern, etcetera, in a manner known as such.

The system further comprises (optionally) a treatment area 9 and a selection gate 12 for guiding an animal 2 to the treatment area 9. This is useful and user-friendly for the farmer, and animal health and welfare can be improved.

The linking location may be situated inside, at or near the milking robot 8, feeding/drinking station 3, 4, selection gate 12 and/or a detection gate (not shown). These are suitable locations for the linking action, because there the animal in question stands still for a while. Preferably, the linking moment is chosen just before or during or after the milking of the animal 2 in the milking robot 8. This is a suitable moment for the automated linking action.

The animal husbandry system is configured for tracking objects comprising animals 2 which can move about in the area 1. Human beings, for example a farmer in the area 1, or vehicles automatically moving about in the area 1 can also be tracked.

In accordance with the invention, the system comprises a number of units 11 configured for locally detecting and tracking the position of the objects, each unit 11 comprising sensor means (e.g. a camera) configured for generating images and unit processing means configured for processing data. The system further comprises a hub (not shown) comprising hub processing means connectable for data communication to all the unit processing means, the units 11 and the hub together being configured for an area-wide tracking of the objects, wherein the system is a modular system, the units 11 are substantially identical and the unit processing means are configured for processing at least data locally obtained from the sensor means in the unit 11. The system can be expanded and is thus flexible. The substantially identical units are economically advantageous. The system is thus user-friendly and cheap. Local data processing in units 11 which are substantially identical allows for a conveniently modular, adaptable system. This results in low costs and high flexibility.

The units 11 comprise a camera and a computer module (not shown) comprising the unit processing means configured for processing and analyzing local sensor image data. Image analysis software is readily available.

The processing of the local sensor image data comprises: detection of the objects in the sensor field of view; local tracking of the objects in the sensor field of view; sending of images and/or processed images to the hub; sending of position data of the objects in the sensor field of view to the hub. An important part of the data processing related to data locally obtained is performed in the unit processing means, which enhances the computational efficiency of the system. The processing of the local sensor image data can further comprise image undistortion and/or image compression.

The processing of the hub processing means comprises: receiving and storing images and/or processed images from the units 11; receiving position data of the objects from the units 11. Thus, the hub processing means are enabled to combine and further process the data locally obtained. The processing of the hub processing means further comprises: image stitching for generating and storing a global image of the area 1; global tracking of the objects in the area 1. Accurate tracking of the objects throughout the entire area 1 is realized in an efficient way.

The processing of the hub processing means may further comprise matching identities of animals 2 detected and tracked by the units 11 with identities of animals 2 determined at an identification location. This further improves the reliability of the tracking process. The processing of the hub processing means further comprises the analysis of animal movements. Such an analysis is very useful for further analysis of the animals 2 concerned. Advantageously, the processing of the hub processing means further comprises the analysis of animal behaviours and/or conditions. In this way, a versatile system is achieved in an efficient way. For example, heat or lameness can be established advantageously with the aid of the hub processing means. Thus, animals 2 in heat can be reliably identified and properly dealt with. For example, they can be separated for artificial insemination.

The unit processing means are configured for performing at least a part of the hub processing. By allotting a part of the hub data processing load to the unit processing means, the hub processing means have more processing capacity free for other applications, so that the system is enhanced.

Alternatively, the hub processing means may be configured for performing at least a part of the unit processing. In this way, it suffices to equip the modular system with units 11 having a low processing capacity, so that the system is cheap.

In an embodiment, wherein the units 11 further comprise illumination means (not shown), the unit processing means are configured for controlling the illumination means in response to data locally obtained. This an efficient implementation. For example, an object detected locally can be illuminated. The hub processing means are configured for controlling the illumination means in response to data related to global tracking of the objects in the area 1. Thus, objects within the whole area 1 can be searched, selected and illuminated. For example, a specific animal 2 or a farmer can be located by the hub processing means and then illuminated.

In an embodiment, wherein the system further comprises at least one vehicle (not shown), the unit processing means are configured for contacting the at least one vehicle for data communication. For example, wifi or bluetooth can be used. The vehicle may be an unmanned, automatic cleaning vehicle, known as such. The hub processing means are configured for controlling the trajectory of the at least one vehicle. The global tracking data in the hub allow for an efficient vehicle traffic control. A further optimization of the system is thus achieved.

The hub processing means can be configured for receiving means for enhancing its processing capacity. In this way, the system can be upgraded and/or expanded, which makes it highly flexible.

As the detection and tracking means comprise cameras, a processor or a computer processing unit, and image analysis means, a very animal-friendly implementation is realized, because the animals 2 are not disturbed in any way. As it is automated, it is also a very user-friendly implementation.

## Claims

1. Animal husbandry system configured for tracking objects comprising animals (2) which can move about in an area (1), the system comprising a number of units (11) configured for locally detecting and tracking the position of the objects, each unit comprising sensor means configured for generating images and unit processing means configured for processing data, the system further comprising a hub comprising hub processing means connectable for data communication to all the unit processing means, the units (11) and the hub together being configured for an area-wide tracking of the objects, wherein the system is a modular system, the units (11) are substantially identical and the unit processing means are configured for processing at least data locally obtained from the sensor means in the unit (11).

2. System according to claim 1, wherein the units (11) comprise a camera and a computer module comprising the unit processing means configured for processing and analysing local sensor image data.

3. System according to claim 2, wherein the processing of the local sensor image data comprises:
- detection of the objects in the sensor field of view;
- local tracking of the objects in the sensor field of view;
- sending of images and/or processed images to the hub;
- sending of position data of the objects in the sensor field of view to the hub.

4. System according to claim 3, wherein the processing of the local sensor image data further comprises image undistortion and/or image compression.

5. System according to any one of claims 3-4, wherein the processing of the hub processing means comprises:
- receiving and storing images and/or processed images from the units (11);
- receiving position data of the objects from the units (11).

6. System according to claim 5, wherein the processing of the hub processing means further comprises:
- image stitching for generating and storing a global image of the area (1);
- global tracking of the objects in the area (1).

7. System according to any one of claims 5-6, wherein the processing of the hub processing means further comprises matching identities of animals (2) detected and tracked by the units (11) with identities of animals (2) determined at an identification location.

8. System according to any one of claims 5-7, wherein the processing of the hub processing means further comprises the analysis of animal movements.

9. System according to any one of claims 5-8, wherein the processing of the hub processing means further comprises the analysis of animal behaviours and/or conditions.

10. System according to any one of claims 6-9, wherein the unit processing means are configured for performing at least a part of the hub processing.

11. System according to any one of claims 3-4, wherein the hub processing means are configured for performing at least a part of the unit processing.

12. System according to any one of claims 1 - 11, wherein the units (11) further comprise illumination means, wherein the unit processing means are configured for controlling the illumination means in response to data locally obtained.

13. System according to any one of claims 6 - 12, wherein the units (11) further comprise illumination means, wherein the hub processing means are configured for controlling the illumination means in response to data related to global tracking of the objects in the area (1).

14. System according to any one of claims 1 - 13, wherein the system further comprises at least one vehicle, wherein the unit processing means are configured for contacting the at least one vehicle for data communication.

15. System according to any one of claims 1 - 14, wherein the system further comprises at least one vehicle, wherein the hub processing means are configured for controlling the trajectory of the at least one vehicle.
